# EUROPEAN PATENT APPLICATION

(11) **EP 2 775 712 A1**
(43) Date of publication of application: **10.09.2014**
(21) Application number: 12859908.1
(22) Date of filing: 22.08.2012
(51) Int. Cl.: H04N 7/26

(54) **VIDEO ENCODING METHOD AND DEVICE**

(30) Priority: 19.12.2011 CN 201110427151
(71) Applicant: Huawei Technologies Co., Ltd., Shenzhen, Guangdong 518129 (CN)
(72) Inventor: WANG, Pulin, Shenzhen Guangdong 518129 (CN); LI, Junhua, Shenzhen Guangdong 518129 (CN)
(74) Representative: Pfenning, Meinig & Partner GbR
(86) International application number: PCT/CN2012/080438
(87) International publication number: WO 2013/091391

(57) **Abstract**

Embodiments of the present invention relate to the field of video encoding technologies, and provide a video encoding method and device, so as to solve a problem that a long-term reference frame as a background frame is unavailable when an irrecoverable error occurs at an encoding end or a decoding end, and a problem that displaying a current frame by the decoding end causes a flicker in a displayed picture when the current frame is incoherent with a neighboring frame in picture content. The method includes: inputting a to-be-encoded video picture; encoding a current frame and specifying the current frame as a long-term reference frame; encoding each frame of the video picture with reference to the long-term reference frame and sending a data packet obtained after the encoding to a decoding end; and after a refreshing frame request sent by the decoding end is received, if it is determined that the long-term reference frame still serves as a reference frame for encoding, sending a non-IDR frame picture to the decoding end, where a macroblock of the non-IDR frame picture includes a macroblock encoded with reference to the long-term reference frame, and/or a macroblock encoded with reference to an intra-frame macroblock. The embodiments of the present invention are used for video encoding.

## Description

### CROSS-REFERENCE TO RELATED APPLICATION

This application claims priority to Chinese Patent Application No. 201110427151.1, filed with the Chinese Patent Office on December 19, 2011 and entitled "VIDEO ENCODING METHOD AND DEVICE", which is incorporated herein by reference in its entirety.

### TECHNICAL FIELD

The present invention relates to the field of video encoding technologies, and in particular, to a video encoding method and device.

### BACKGROUND

Generally, content of neighboring frames of a moving picture does not have a substantial change (except in a case such as scene switching), that is, a picture sequence has a strong temporal correlation. Therefore, the temporal correlation of a picture sequence may be utilized to use data of a previous frame picture as a reference frame to predict data of a next frame picture, so as to only transmit a difference between the data of the previous frame picture and the data of the next frame picture, thereby reducing an amount of data to be transmitted.

Reference frames are categorized to short-term reference frames and long-term reference frames. For a short-term reference frame, in a reference frame list, a first-in-first-out mechanism is adopted for the short-term reference frame, where, after a new picture is obtained by decoding, a previous short-term reference frame is removed from the reference picture list. A long-term reference frame is different from the short-term reference frame. The long-term reference frame exists in the reference picture list in a long term and serves as a reference for following pictures all the time until a specific syntax element is used to indicate that the long-term reference frame does not serve as a reference frame.

In a video encoding process, when a picture background does not change and picture content between neighboring frames moves, for example, an (n+1)^{th} frame is a to-be-encoded current picture and an n^{th} frame is a short-term reference picture of the current picture, for an area at a same location in the (n+1)^{th} frame picture and the n^{th} frame picture, if the area in the n^{th} frame picture is picture content and the picture content is moving, the area at the same location in the (n+1)^{th} frame picture becomes a picture background. If the n^{th} frame is used as a short-term reference frame to predict and encode the (n+1)^{th} frame picture, in the foregoing area, the picture background of the (n+1)^{th} frame is predicted by referring to the picture content of the n^{th} frame, resulting in a very large residual. Therefore, a coder selects an "intra (intra-frame)" mode to encode the (n+1)^{th} frame. If a background frame is selected as a long-term reference frame and encoding is performed with reference to the long-term reference frame, and because content in the long-term reference frame is completely the same as a background of an area where a change exists between the (n+1)^{th} frame and the n^{th} frame, the coder selects a "skip (skip)" mode to encode a macroblock in the area. In comparison with the "intra" mode, the "skip" mode greatly saves a code rate. It can be seen that a compression efficiency of encoding with reference to the long-term reference frame is higher than that of encoding with reference to the short-term reference frame.

In the prior art, encoding with reference to a long-term reference frame generally has the following problems: When an irrecoverable error occurs at an encoding end or a decoding end, an IDR (Instantaneous Decoding Refresh, instantaneous decoding refresh) frame has to be sent to clear a reference picture buffer, which also clears the long-term reference frame which serves as a background frame, and as a result, the long-term reference frame which serves as the background frame is unavailable. In addition, if a current frame is incoherent with a neighboring frame in picture content, displaying the current frame by the decoding end causes a flicker in a displayed picture.

### SUMMARY

Embodiments of the present invention provide a video encoding method and device, so as to solve the problem that a long-term reference frame as a background frame is unavailable when an irrecoverable error occurs at an encoding end or a decoding end, and the problem that displaying a current frame by the decoding end causes a flicker in a displayed picture when the current frame is incoherent with a neighboring frame in picture content.

To achieve the foregoing objective, the embodiments of the present invention adopt the following technical solutions:
According to one aspect of the embodiments of the present invention, a video encoding method is provided, including:
   inputting a to-be-encoded video picture;
   encoding a current frame obtained according to the video picture and specifying the
   current frame as a long-term reference frame;
   encoding each frame of the video picture with reference to the long-term reference frame and sending a data packet obtained after the encoding to a decoding end; and after a refreshing frame request sent by the decoding end is received, if it is determined that the long-term reference frame still serves as a reference frame for encoding, sending a non-IDR frame picture to the decoding end, where a macroblock of the non-IDR frame picture includes a macroblock encoded with reference to the long-term reference frame,
   and/or a macroblock encoded with reference to an intra-frame macroblock.

According to another aspect of the embodiments of the present invention, a video encoding method is provided, including:
inputting a to-be-encoded video picture;
encoding a current frame obtained according to the video picture and specifying the current frame as a long-term reference frame;
encoding each frame of the video picture with reference to the long-term reference frame and sending a data packet obtained after the encoding to a decoding end; and if it is determined that the current frame does not need to be displayed at the decoding end, indicating by means of encoding that the current frame is not to be displayed, so that the decoding end does not display the current frame after the video picture is received.

According to another aspect of the embodiments of the present invention, a video encoding device is provided, including:
an input unit, configured to input a to-be-encoded video picture;
an encoding unit, configured to encode a current frame obtained according to the video picture and specify the current frame as a long-term reference frame; encode each frame of the video picture with reference to the long-term reference frame, and send a data packet obtained after the encoding to a decoding end;
a receiving unit, configured to receive a refreshing frame request sent by the decoding end, and
a refreshing frame sending unit, configured to: after the refreshing frame request sent by the decoding end is received, if it is determined that the long-term reference frame still serves as a reference frame for encoding, send a non-IDR frame picture to the decoding end, where a macroblock of the non-IDR frame picture includes a macroblock encoded with reference to the long-term reference frame, and/or a macroblock encoded with reference to an intra-frame macroblock.

According to another aspect of the embodiments of the present invention, a video encoding device is provided, including:
an input unit, configured to input a to-be-encoded video picture;
an encoding unit, configured to encode a current frame obtained according to the video picture and specify the current frame as a long-term reference frame; encode each frame of the video picture with reference to the long-term reference frame, and send a data packet obtained after the encoding to a decoding end; and
an indication unit, configured to: if it is determined that the current frame does not need to be displayed at the decoding end, indicate by means of encoding that the current frame is not to be displayed, so that the decoding end does not display the current frame after the video picture is received.

In the video encoding method and device provided by the embodiments of the present invention, in a process of encoding with reference to a long-term reference frame, after a refreshing frame request sent by a decoding end is received, if it is determined that the long-term reference frame still serves as a reference frame, a picture encoded with reference to the long-term reference frame is sent to the decoding end, and/or a non-IDR frame picture encoded with reference to an intra-frame macroblock is sent to the decoding end. In this way, because a refreshing frame is not an IDR frame, not all buffered reference pictures are cleared; therefore, the long-term reference frame as a background frame is still available, thereby avoiding the problem that the long-term reference frame as the background frame is unavailable when an irrecoverable error occurs at an encoding end or the decoding end. In addition, when it is determined that a current frame does not need to be displayed, it is indicated by means of encoding that the current frame is not to be displayed, thereby avoiding the problem that displaying the current frame by the decoding end causes a flicker in a displayed picture when the current frame is incoherent with a neighboring frame in picture content.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG 1 is a schematic flowchart of a video encoding method provided by an embodiment of the present invention;
FIG 2 is a schematic flowchart of another video encoding method provided by an embodiment of the present invention;
FIG 3 is a schematic flowchart of still another video encoding method provided by an embodiment of the present invention;
FIG. 4 is a schematic flowchart of yet another video encoding method provided by an embodiment of the present invention;
FIG 5 is a schematic structural diagram of a video encoding device provided by an embodiment of the present invention;
FIG 6 is a schematic structural diagram of another video encoding device provided by an embodiment of the present invention; and
FIG 7 is a schematic structural diagram of still another video encoding device provided by an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

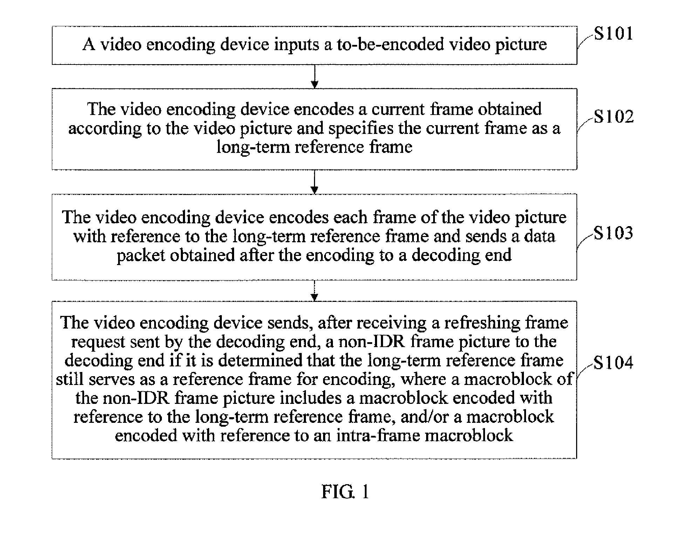

As shown in FIG 1, a video encoding method provided by an embodiment of the present invention includes:
S101: A video encoding device inputs a to-be-encoded video picture.
S102: The video encoding device encodes a current frame obtained according to the video picture and specifies the current frame as a long-term reference frame.
S103: The video encoding device encodes each frame of the video picture with reference to the long-term reference frame and sends a data packet obtained after the encoding to a decoding end.
S104: The video encoding device sends, after receiving a refreshing frame request sent by the decoding end, a non-IDR frame picture to the decoding end if it is determined that the long-term reference frame still serves as a reference frame for encoding, where a macroblock of the non-IDR frame picture includes a macroblock encoded with reference to the long-term reference frame, and/or a macroblock encoded with reference to an intra-frame macroblock.

In the video encoding method provided by the embodiment of the present invention, in a process of encoding with reference to a long-term reference frame, after a refreshing frame request sent by a decoding end is received, if it is determined that the long-term reference frame still serves as a reference frame, a picture encoded with reference to the long-term reference frame is sent to the decoding end, and/or a non-IDR frame picture encoded with reference to an intra-frame macroblock is sent to the decoding end. In this way, because a refreshing frame is not an IDR frame, not all buffered reference pictures are cleared; therefore, the long-term reference frame as a background frame is still available, thereby avoiding a problem that the long-term reference frame as the background frame is unavailable when an irrecoverable error occurs at an encoding end or the decoding end.

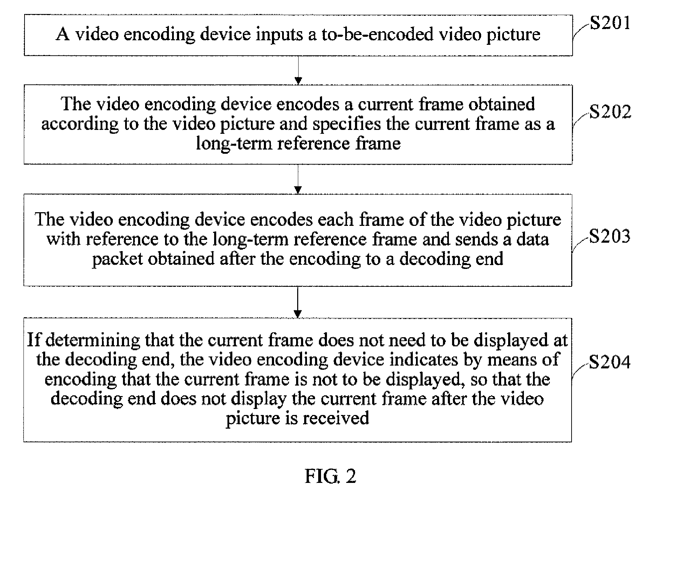

As shown in FIG 2, a video encoding method provided by another embodiment of the present invention includes:
S201: A video encoding device inputs a to-be-encoded video picture.
S202: The video encoding device encodes a current frame obtained according to the video picture and specifies the current frame as a long-term reference frame.
S203: The video encoding device encodes each frame of the video picture with reference to the long-term reference frame and sends a data packet obtained after the encoding to a decoding end. S204: If determining that the current frame does not need to be displayed at the decoding end, the video encoding device indicates by means of encoding that the current frame is not to be displayed, so that the decoding end does not display the current frame after the video picture is received.

In the video encoding method provided by the embodiment of the present invention, when it is determined that a current frame does not need to be displayed, it is indicated by means of encoding that the current frame is not to be displayed, thereby avoiding a problem that displaying the current frame by a decoding end causes a flicker in a displayed picture when the current frame is incoherent with a neighboring frame in picture content.

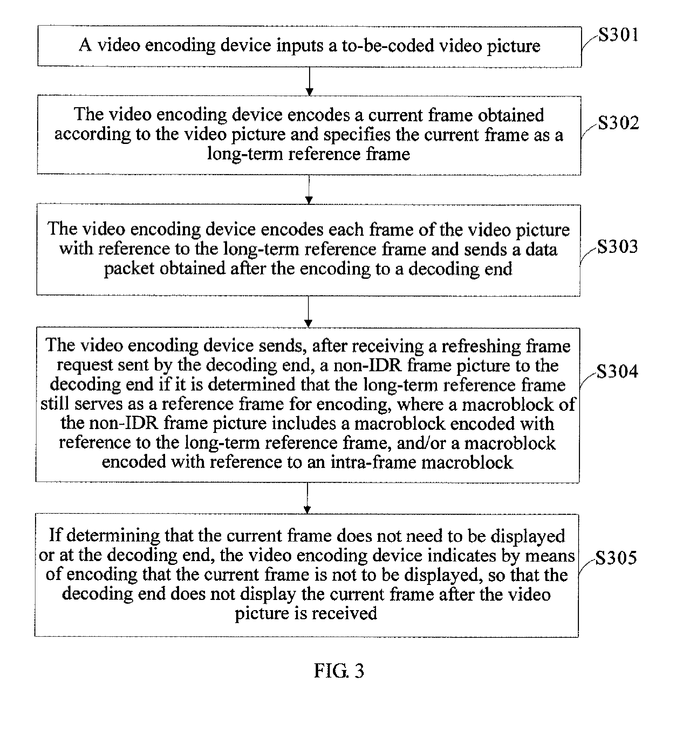

As shown in FIG 3, a video encoding method provided by still another embodiment of the present invention includes:
S301: A video encoding device inputs a to-be-encoded video picture.
S302: The video encoding device encodes a current frame obtained according to the video picture and specifies the current frame as a long-term reference frame.

Specifically, the video encoding device may obtain a frame of picture from the video picture as the long-term reference frame; or, synthesize at least two frames of picture from the video picture as the long-term reference frame; or, the video encoding device may photograph a background picture of a frame of picture in the video picture as the long-term reference frame; or, photograph background pictures of at least two frames of picture in the video picture and synthesize the background pictures of the at least two frames of picture as the long-term reference frame.

In addition, after the current frame is specified as the long-term reference frame, the video encoding device may further set a transmission priority for the long-term reference frame.

For example, in a scenario where a background basically does not change, the long-term reference picture as the background needs to serve as a reference in a long term; therefore, it is necessary to set a high transmission priority for the frame picture, and in a transmission process, correctness of code stream transmission of the frame is ensured preferentially.

S303: The video encoding device encodes each frame of the video picture with reference to the long-term reference frame and sends a data packet obtained after the encoding to a decoding end.

S304: The video encoding device sends, after receiving a refreshing frame request sent by the decoding end, a non-IDR frame picture to the decoding end if it is determined that the long-term reference frame still serves as a reference frame for encoding, where a macroblock of the non-IDR frame picture includes a macroblock encoded with reference to the long-term reference frame, and/or a macroblock encoded with reference to an intra-frame macroblock.

Specifically, when an irrecoverable error occurs at an encoding end or the decoding end, because the error occurs with encoding with reference to a current short-term reference frame, the short-term reference frame no longer serves as a reference and the decoding end sends the refreshing frame request to the video encoding device.

After the refreshing frame request sent by the decoding end is received, the video encoding device first determines whether all buffered reference pictures have to be cleared, and sends an IDR frame picture to the decoding end if it is determined that both the short-term reference frame and the long-term reference frame no longer serve as a reference frame, so as to clear all the buffered reference pictures including the short-term reference frame and the long-term reference frame. If it is determined that the long-term reference frame still serves as the reference frame, only the short-term reference frame needs to be cleared and a non-IDR frame picture is sent to the decoding end. A macroblock of the non-IDR frame picture includes a macroblock encoded with reference to the long-term reference frame, and/or a macroblock encoded with reference to an intra-frame macroblock. A picture following the non-IDR frame picture may be encoded with reference to the non-IDR frame picture rather than with reference to the short-term reference frame at which the error occurs. In this way, encoding is performed without reference to the short-term reference frame at which the error occurs, and a problem is avoided that the long-term reference frame as the background frame is cleared and is therefore unavailable.

S305: If determining that the current frame does not need to be displayed at the decoding end, the video encoding device indicates by means of encoding that the current frame is not to be displayed, so that the decoding end does not display the current frame after the video picture is received.

For example, if the current frame is a frame in the input to-be-encoded video picture, and the current frame is continuous and coherent with a neighboring frame in picture, the current frame picture should be output after decoding, so as to ensure a coherent and smooth decoded picture. If the current frame is a virtual picture synthesized according to multiple frames of to-be-encoded video picture, because the current frame picture is substantially different from a neighboring picture in content, and problems, such as an obvious flicker in an output picture, are caused if the current frame is selected and output, and therefore the current frame should not be output after decoding. Specifically, when the current frame does not need to be used for display, the video encoding device may set, in the data packet sent to the decoding end, a predetermined flag indicating that the current frame is not to be displayed. In the existing H.264 protocol syntax, the video encoding device may appoint, in SEI (Supplemental Enhancement Information, supplemental enhancement information) packet content, a flag indicating that a code stream is not used for display after decoding, and a receiving end determines according to the flag that the current frame is not to be displayed after a picture is decoded.

The video encoding device may also indicate by setting a syntax element in the protocol syntax that the current frame is not to be displayed.

The video encoding device may also indicate by setting a field at a signaling transmission layer that the current frame is not to be displayed. For example, whether a code stream is used for display is indicated by a CSRC (Contributing source, contributing source) field in an RTP (Real-time Transport Protocol, Real-time Transport Protocol) packet.

In the video encoding method provided by the embodiment of the present invention, in a process of encoding with reference to a long-term reference frame, after a refreshing frame request sent by a decoding end is received, if it is determined that the long-term reference frame still serves as a reference frame, a picture encoded with reference to the long-term reference frame is sent to the decoding end, and/or a non-IDR frame picture encoded with reference to an intra-frame macroblock is sent to the decoding end. In this way, because a refreshing frame is not an IDR frame, not all buffered reference pictures are cleared; therefore, the long-term reference frame as a background frame is still available, thereby avoiding the problem that the long-term reference frame as the background frame is unavailable when an irrecoverable error occurs at an encoding end or the decoding end. In addition, when it is determined that the current long-term reference frame does not need to be displayed, it is indicated by means of encoding that the current long-term reference frame is not to be displayed, thereby avoiding a problem that displaying the current frame by the decoding end causes a flicker in a displayed picture when the current frame is incoherent with a neighboring frame in picture content.

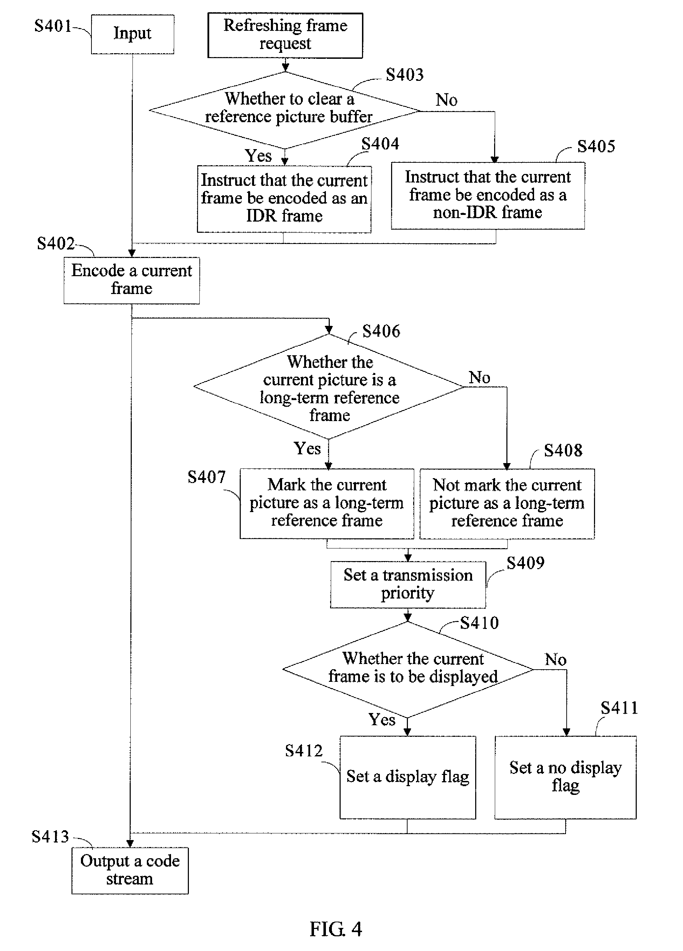

As shown in FIG 4, a video encoding method provided by yet another embodiment of the present invention for an H.264 protocol includes:
S401: A video encoding device inputs a to-be-encoded video picture.
S402: The video encoding device encodes a current frame obtained according to the video picture.
S403: The video encoding device determines whether it is needed to clear a long-term reference frame after a refreshing frame request sent by a decoding end is received; if needed, execute step
S404; and if not needed, execute step S405.
S404: The video encoding device instructs that the current frame be encoded as an IDR frame picture, so as to clear all buffered reference pictures.

For example, the video encoding device may encode all macroblocks in a frame of picture by using an intra-frame compression mode and set a Nal_unit_type to 5 to obtain an IDR frame by encoding, so as to clear all the buffered reference pictures by using the IDR picture as a refreshing frame.

S405: The video encoding device instructs that the current frame be encoded as a non-IDR frame picture, where a macroblock of the non-IDR frame picture includes a macroblock encoded with reference to the long-term reference frame, and/or a macroblock encoded with reference to an intra-frame macroblock.

For example, the video encoding device may implement a refreshing frame by encoding all macroblocks in a picture by using an intra-frame compression mode or by using an inter-frame prediction mode with reference to the long-term reference frame, so as to ensure correctness of decoding performed by a receiving end. Moreover, a nal_unit_type is set to a value other than 5 so as to obtain a non-IDR frame by encoding, so that the long-term reference frame in a reference picture buffer can continue to serve as a reference.

S406: The video encoding device determines whether a current picture is a long-term reference frame; if yes, execute step S409; and if not, execute step S410.

For example, in a encoding process, it may be stipulated that, during picture encoding, a frame is specified or a frame of picture is inserted every 200 frames to serve as a long-term reference frame; and the video encoding device may determine whether the current frame is a long-term reference frame according to the counted number of frames.

S407: The video encoding device marks the current picture as a long-term reference frame. Specifically, the video encoding device may mark the current picture as the long-term reference frame by separately setting an adaptive_ref_pic_marking_mode_flag flag to 1, setting a memory_management_cintrol_operation flag to 6, and setting a long_term_frame_idx value of the current frame.

S408: The video encoding device marks a short-term reference frame as a long-term reference frame.

Specifically, the video encoding device may not mark the current picture as the long-term reference frame by separately setting the adaptive_ref_pic_marking_mode_flag flag to 1, setting the memory_management_cintrol_operation flag to 3, and setting a long_term_frame_idx value of a short-term reference frame, so as to mark the short-term reference frame as the long-term reference frame.

S409: The video encoding device sets a transmission priority of the long-term reference frame. S410: The video encoding device determines whether the current frame needs to be displayed; when it is determined that the current frame does not need to be displayed, execute step S411; and when it is determined that the current frame needs to be used for displaying, execute step S412.

S411: The video encoding device sets a no display flag.

Specifically, in the H.264 protocol, whether full-frame freeze and full-frame freeze release are performed is specified by using Full-frame freeze SEI and Full-frame freeze release SEI. When full-frame freeze is performed, decoding of the current picture is completed, and the current picture does not need to update displayed video frame content, so as to keep the displayed video frame content unchanged, thereby achieving a no display purpose after a single frame or multiple frames of picture are decoded.

For example, when it is only needed that the long-term reference frame not be displayed in a current frame, it may be implemented by sending Full-frame freeze SEI (SEI payloadtype = 13) and setting a full_frame_freeze_repetition_period to 0.

For another example, when it is needed that multiple frames of picture not be displayed, the Full-frame freeze SEI (SEI payloadtype = 13) is sent in a starting frame of long-term reference frames that do not need to be displayed, and the full_frame_freeze_repetition_period is set to 1. A piece of full-frame freeze release SEI (SEI payloadtype = 14) is sent in a frame where freeze release is needed, so as to implement that the multiple frames of picture are not displayed.

For still another example, when it is needed that multiple frames of picture not be displayed, the Full-frame freeze SEI (SEI payloadtype = 13) is sent in a starting frame of long-term reference frames that do not need to be displayed, and the full_frame_freeze_repetition_period is set to 1. An SPS (Sequence parameter set, sequence parameter set) or a PPS (Picture parameter set, picture parameter set) is sent in a frame where freeze release is needed, and a new IDR frame is obtained by encoding to start a new sequence, so as to perform the freeze release automatically.

S412: The video encoding device sets a display flag.

S413: The video encoding device outputs a code stream of the encoded video picture.

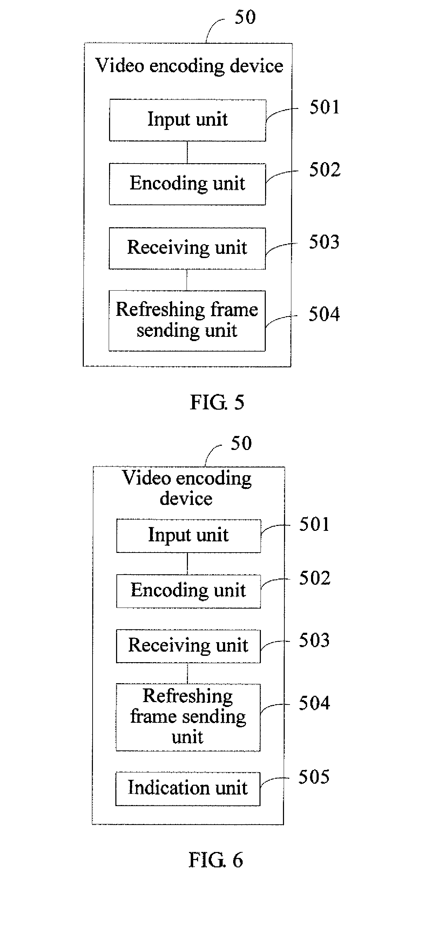

In the video encoding method provided by the embodiment of the present invention, in a process of encoding with reference to a long-term reference frame, after a refreshing frame request sent by a decoding end is received, if it is determined that the long-term reference frame still serves as a reference frame, a picture encoded with reference to the long-term reference frame is sent to the decoding end, and/or a non-IDR frame picture encoded with reference to an intra-frame macroblock is sent to the decoding end. In this way, because a refreshing frame is not an IDR frame, the existing long-term reference frame is not cleared; thereby avoiding a problem that the long-term reference frame as the background frame is unavailable when an irrecoverable error occurs at an encoding end or the decoding end. In addition, when it is determined that a current frame does not need to be displayed, it is indicated by means of encoding that the current frame is not to be displayed, thereby avoiding a problem that displaying the current frame by the decoding end causes a flicker in a displayed picture when the current frame is incoherent with a neighboring frame in picture content. A video encoding device 50 provided by an embodiment of the present invention corresponds to the foregoing method embodiments, and can be used for all steps in the foregoing method embodiments. Specific steps of the video encoding device 50 are described in the foregoing method embodiments and are not described in detail again herein. As shown in FIG 5, the video encoding device 50 includes:
an input unit 501, configured to input a to-be-encoded video picture;
an encoding unit 502, configured to encode a current frame obtained according to the video picture and specify the current frame as a long-term reference frame; encode each frame of the video picture with reference to the long-term reference frame; and send a data packet obtained after the encoding to a decoding end;
a receiving unit 503, configured to receive a refreshing frame request sent by the decoding end, and
a refreshing frame sending unit 504, configured to: after the refreshing frame request sent by the decoding end is received, if it is determined that the long-term reference frame still serves as a reference frame for encoding, send a non-IDR frame picture to the decoding end, where a macroblock of the non-IDR frame picture includes a macroblock encoded with reference to the long-term reference frame, and/or a macroblock encoded with reference to an intra-frame macroblock.

The video encoding device provided by the embodiment of the present invention sends, in a process of encoding with reference to a long-term reference frame, after a refreshing frame request sent by a decoding end is received, a picture encoded with reference to the long-term reference frame to the decoding end, and/or a non-IDR frame picture encoded with reference to an intra-frame macroblock to the decoding end if it is determined that the long-term reference frame still serves as a reference frame. In this way, because a refreshing frame is not an IDR frame, not all buffered reference pictures are cleared; therefore, the long-term reference frame as a background frame is still available, thereby avoiding a problem that the long-term reference frame as the background frame is unavailable when an irrecoverable error occurs at an encoding end or the decoding end.

Further, as shown in FIG. 6, the video encoding device 50 may further include:
an indication unit 505, configured to: if it is determined that the current frame does not need to be displayed at the decoding end, indicate by means of encoding that the current frame is not to be displayed, so that the decoding end does not display the current frame after the video picture is received.

The refreshing frame sending unit 504 may be further configured to:
after the refreshing frame request sent by the decoding end is received, if it is determined that the long-term reference frame does not serve as a reference frame for encoding, send an IDR frame picture to the decoding end.

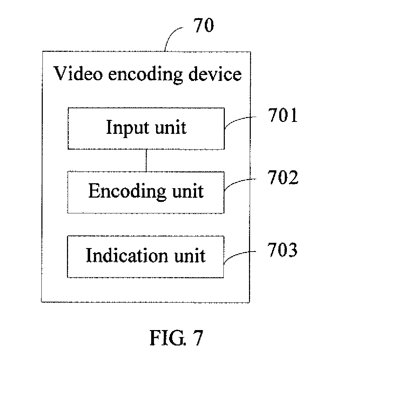

A video encoding device 70 provided by an embodiment of the present invention corresponds to the foregoing method embodiments, and can be used for all steps in the foregoing method embodiments. Specific steps of the video encoding device 70 are described in the foregoing method embodiments and are not described in detail again herein. As shown in FIG 7, the video encoding device 70 includes:
an input unit 701, configured to input a to-be-encoded video picture;
an encoding unit 702, configured to encode a current frame obtained according to the video picture and specify the current frame as a long-term reference frame; encode each frame of the video picture with reference to the long-term reference frame, and send a data packet obtained after the encoding to a decoding end; and
an indication unit 703, configured to: if it is determined that the current frame does not need to be displayed at the decoding end, indicate by means of encoding that the current frame is not to be displayed, so that the decoding end does not display the current frame after the video picture is received.

The video encoding device provided by the embodiment of the present invention indicates by means of encoding that a current frame is not to be displayed when it is determined that the current frame does not need to be displayed, thereby avoiding a problem that displaying the current frame by a decoding end causes a flicker in a displayed picture when the current frame is incoherent with a neighboring frame in picture content.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A video encoding method, comprising:
inputting a to-be-encoded video picture;
encoding a current frame obtained according to the video picture and specifying the current frame as a long-term reference frame;
encoding each frame of the video picture with reference to the long-term reference frame and sending a data packet obtained after the encoding to a decoding end; and
after a refreshing frame request sent by the decoding end is received, if it is determined that the long-term reference frame still serves as a reference frame for encoding, sending a non-IDR frame picture to the decoding end, wherein a macroblock of the non-IDR frame picture comprises a macroblock encoded with reference to the long-term reference frame, and/or a macroblock encoded with reference to an intra-frame macroblock.

2. The method according to claim 1, wherein the method further comprises:
after the refreshing frame request sent by the decoding end is received, if it is determined that the long-term reference frame does not serve as the reference frame for encoding, sending an IDR frame picture to the decoding end.

3. The method according to claim 1, wherein the current frame obtained according to the video picture comprises:
obtaining a frame of picture from the video picture as the long-term reference frame;
or, synthesizing at least two frames of picture from the video picture as the long-term reference frame;
or, photographing a background picture of a frame of picture in the video picture as the long-term reference frame;
or, photographing background pictures of at least two frames of picture in the video picture and synthesizing the background pictures of the at least two frames of picture as the long-term reference frame.

4. The method according to claim 1, wherein the method further comprises:
if it is determined that the current frame does not need to be displayed at the decoding end, indicating by means of encoding that the current frame is not to be displayed, so that the decoding end does not display the current frame after the video picture is received.

5. The method according to claim 4, wherein the indicating by means of encoding that the current frame is not to be displayed comprises:
in a data packet obtained by encoding the current frame, setting a predetermined flag indicating that the current frame is not to be displayed;
or, setting a syntax element in a protocol syntax to indicate that the current frame is not to be displayed;
or, setting a field at a signaling transmission layer to indicate that the current frame is not to be displayed.

6. A video encoding method, comprising:
inputting a to-be-encoded video picture;
encoding a current frame obtained according to the video picture and specifying the current frame as a long-term reference frame;
encoding each frame of the video picture with reference to the long-term reference frame and sending a data packet obtained after the encoding to a decoding end; and
if it is determined that the current frame does not need to be displayed at the decoding end, indicating by means of encoding that the current frame is not to be displayed, so that the decoding end does not display the current frame after the video picture is received.

7. The method according to claim 6, wherein the indicating by means of encoding that the current frame is not to be displayed comprises:
in a data packet obtained by encoding the current frame, setting a predetermined flag indicating that the current frame is not to be displayed;
or, setting a syntax element in a protocol syntax to indicate that the current frame is not to be displayed;
or, setting a field at a signaling transmission layer to indicate that the current frame is not to be displayed.

8. A video encoding device, comprising:
an input unit, configured to input a to-be-encoded video picture;
an encoding unit, configured to encode a current frame obtained according to the video picture and specify the current frame as a long-term reference frame; encode each frame of the video picture with reference to the long-term reference frame, and send a data packet obtained after the encoding to a decoding end;
a receiving unit, configured to receive a refreshing frame request sent by the decoding end; and
a refreshing frame sending unit, configured to: after the refreshing frame request sent by the decoding end is received, if it is determined that the long-term reference frame still serves as a reference frame for encoding, send a non-IDR frame picture to the decoding end, wherein a macroblock of the non-IDR frame picture comprises a macroblock encoded with reference to the long-term reference frame, and/or a macroblock encoded with reference to an intra-frame macroblock.

9. The device according to claim 8, wherein the refreshing frame sending unit is further configured to:
after the refreshing frame request sent by the decoding end is received, if it is determined that the long-term reference frame does not serve as the reference frame for encoding, send an IDR frame picture to the decoding end.

10. The device according to claim 8, wherein the device further comprises:
an indication unit, configured to: if it is determined that the current frame does not need to be displayed at the decoding end, indicate by means of encoding that the current frame is not to be displayed, so that the decoding end does not display the current frame after the video picture is received.

11. A video encoding device, comprising:
an input unit, configured to input a to-be-encoded video picture;
an encoding unit, configured to encode a current frame obtained according to the video picture and specify the current frame as a long-term reference frame; encode each frame of the video picture with reference to the long-term reference frame; and send a data packet obtained after the encoding to a decoding end; and
an indication unit, configured to: if it is determined that the current frame does not need to be displayed at the decoding end, indicate by means of encoding that the current frame is not to be displayed, so that the decoding end does not display the current frame after the video picture is received.
